# EUROPEAN PATENT APPLICATION

(11) **EP 3 945 114 A1**
(43) Date of publication of application: **02.02.2022**
(21) Application number: 20188039.0
(22) Date of filing: 28.07.2020
(51) Int. Cl.: C08L 69/00, C23C 18/20

(54) **THERMOPLASTIC COMPOSITION FOR LASER DIRECT STRUCTURING**

(71) Applicant: MEP Europe B.V., 6167 RD Geleen (NL)
(72) Inventor: Schrauwen, Bernardus Antonius Gerardus, 6167 RD Geleen (NL)
(74) Representative: Renkema, Jaap

(57) **Abstract**

The invention relates to a thermoplastic composition comprising:
a) 20 to 90 wt% of a thermoplastic resin,
b) a laser direct structuring additive,
c) optionally ceramic filler particles which do not have a laser direct structuring additive function and
d) 0.1 to 5.0 wt% of an acid-modified polymer,
wherein b) comprises
b1) a conductive metal oxide, wherein the conductive oxide has a resistivity of at most 5 x 10³ Ω·cm and contains at least a metal of Group n of the periodic table and a metal of Group n+1, wherein n is an integer of 3 to 13, and/or
b2) calcium copper titanate.

## Description

The present invention relates to a thermoplastic composition suitable for use in a laser direct structuring process. The invention also relates to a molded part comprising the composition. The invention also relates to a process for producing a circuit carrier by providing the molded part with a conductive track by a laser radiation and a subsequent metallization, and the circuit carrier obtainable thereby.

With recent development in mobile phones including smartphone, many investigations have been made on methods of manufacturing an antenna inside the mobile phones. There has been a particular need for enabling three-dimensional design of the antenna inside the mobile phones. Laser direct structuring (occasionally referred to as "LDS", hereinafter) is one of known methods of forming such three-dimensional antenna. LDS is a technique of forming a plated layer, typically by irradiating laser to the surface of a resin molded article that contains an LDS additive, to thereby activate only the portion irradiated by the laser, and then by applying a metal to the activated portion. A desirable characteristic of this technique is that a metal structure, such as antenna, may be fabricated directly on the surface of a resin base, without using an adhesive or the like.

The developments in the smartphones have resulted in a demand for a high dielectric constant (DC) of the material for making antennas. A high DC would enable the reduction of the size of the antenna. Current prior art materials have yet to provide an LDS material having a high DC. In particular, a polycarbonate-based composition has a relatively low DC.

US2009/0292051 discloses a thermoplastic composition comprising 10 to 90 wt% of a thermoplastic base resin, 0.1 to 30 wt% of a laser direct structuring additive and 10 to 80 wt% of a ceramic filler. According to US2009/0292051, the LDS additives help increase the dielectric constant and thus less ceramic filler is needed to achieve the same levels of dielectric constant of the composition. The LDS additive is a heavy metal mixture oxide spinel or a copper salt. The ceramic filler used in the examples is a mixture of BaTiO3 and TiO2 at a ratio of 39/21. In the examples, the thermoplastic base resin is a poly(acylene ether), PA66, PPA or PPO.

One of the most important properties of an LDS composition is the platability. EP2998361B1 describes a new LDS additive containing a conductive oxide containing at least two kinds of metals and also having a resistivity of 5 x 10³ Ω·cm or less, wherein the laser direct structuring additive contains at least a metal of Group n, wherein n is an integer of 3 to 13, and a metal of Group n+1 of the periodic table. The conductive oxide was found to have high platability.

Another important demand is the prevention of polymer degradation. In WO2009/024496, it has been shown that the LDS additive degrades aromatic polycarbonate as shown by the decrease in Mw, which in turn results in a large increase in MFI and a severe decrease of impact strength. WO2009/024496 solves this problem by preventing degradation by the use of a rubber-like polymer.

Accordingly, an LDS composition having a high DC in which polymer degradation is prevented is desired.

It is an object of the invention to provide an LDS composition in which the above-mentioned and/or other demands are met.

Accordingly, the invention provides a thermoplastic composition comprising:
a) 20 to 90 wt% of a thermoplastic resin,
b) a laser direct structuring additive,
c) optionally ceramic filler particles which do not have a laser direct structuring additive function and
d) 0.1 to 5.0 wt% of an acid-modified polymer,
wherein b) comprises
b1) a conductive metal oxide, wherein the conductive oxide has a resistivity of at most 5 x 10³ Ω·cm and contains at least a metal of Group n of the periodic table and a metal of Group n+1, wherein n is an integer of 3 to 13, and/or
b2) calcium copper titanate.

The inventors have observed that the LDS additive used in the present invention not only achieves a good platability but also substantially contributes in increasing the DC of the composition. However, the inventors have also observed that the LDS additive used in the present invention causes degradation of the thermoplastic resin. The inventors have surprisingly found that the addition of the acid-modified polymer to such composition prevents such degradation. Thus, according to the invention, a high DC is achieved while a polymer degradation is prevented.

### a) thermoplastic resin

The thermoplastic resin may comprise resins such as polycarbonate in particular aromatic polycarbonate, polyamide, polyester, polyesteramide, polystyrene, polymethyl methacrylate, polyphenylene ether, liquid crystal polymer (LCP), polyether ether ketone (PEEK), cyclic olefin (co)polymer (COP) or combinations thereof. The resins may be homopolymers, copolymers or mixtures thereof, and may be branched or non-branched.

Examples of suitable polyamides (PA) are aliphatic polyamides, that may be branched polyamides, such as PA6, PA46, PA66, PA6/66, PA 11, PA12, semi aromatic polyamides as MXD6, PA6I/6T, PA66/6T, PA4T fully aromatic polyamides and copolymers and blends of the listed polyamides. Examples of suitable polyesters are polyethylene terephtalate (PET), polybutylene terephtalate (PBT), polypropylene terephtalate (PPT), polyethylene naphtanoate (PEN), polybutylene naphtanoate (PBN). Preferred polyesters are polyethylene terephtalate and polybutylene terephtalate. Polyphenylene ether is typically used in combination with polyamide or polystyrene. Examples of suitable LCP are commercialized as Vectra^{®} E845i LDS, E840i LDS, TECACOMP LCP LDS black4107. Examples of suitable PEEK are commercialized as TECACOMP PEEK LDS. Examples of suitable COP are commercialized as ZEONEX RS420-LDS Cyclo Olefin Polymer.

The thermoplastic resin may further comprise a rubber-like polymer. Examples of rubber-like polymer are described in WO-A-2009024496, which is incorporated herein by reference. The rubber- like polymer is or contains an elastomeric (i.e. rubbery) polymer having preferably a Tg less than about 10 °C, more specifically less than about -10 °C, or more specifically about -20 °C to -80 °C.

In some embodiments, the composition according to the invention comprises less than 2.5 wt% of a rubber-like polymer. The present invention is advantageous in that polymer degradation can be prevented even for a composition comprising little or no amount of a rubber-like polymer.

In preferred embodiments, the thermoplastic resin is a polycarbonate-based resin. The polycarbonate-based resin may be polycarbonate or a blend of polycarbonate and a rubber-like polymer such as acrylonitrile butadiene styrene rubber (ABS). The polycarbonates may be homopolymers, copolymers and mixtures thereof, and may be branched or non-branched. Suitable polycarbonate-based resins are described e.g. in US2009/0292048, which is incorporated herein by reference.

Polycarbonates including aromatic carbonate chain units include compositions having structural units of the formula (I):

-R¹-O-CO-O- (I)

in which the R¹ groups are aromatic, aliphatic or alicyclic radicals. Beneficially, R¹ is an aromatic organic radical and, in an alternative embodiment, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A². Illustrative examples of radicals of this type are -O-, -S-, -S(O)-, -S(O2)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Suitable aromatic polycarbonate resins include polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are:
4,4'-dihydroxybiphenyl, 2,2-bis(4-hydroxyphenyl)propane (bisphenol A),
2,2-bis(4-hydroxy-3-methylphenyl)propane,
2,2-bis-(3-chloro-4-hydroxyphenyl)-propane,
2,2-bis-(3,5-dimethyl-4-hydroxyphenyl)-propane,
2,4-bis-(4-hydroxyphenyl)-2-methylbutane,
2,4-bis-(3,5-dimethyl-4-hydroxyphenyl)-2-methylbutane,
4,4-bis(4-hydroxyphenyl)heptane, bis-(3,5-dimethyl-4-hydroxyphenyl)-methane,
1,1-bis-(4-hydroxyphenyl)-cyclohexane,
1,1-bis-(3,5-dimethyl-4-hydroxyphenyl)-cyclohexane,
2,2-(3,5,3',5'-tetrachloro-4,4'-dihydroxydiphenyl)propane,
2,2-(3,5,3',5'-tetrabromo-4,4'-dihydroxydiphenyl)propane,
(3,3'-dichloro-4,4'-dihydroxyphenyl)methane,
bis-(3,5-dimethyl-4-hydroxyphenyl)-sulphon, bis-4-hydroxyphenylsulphon,
bis-4-hydroxyphenylsulphide.

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonate resins in the composition according to the invention may be prepared using a catalyst, an acid acceptor and a compound for controlling the molecular mass.

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular mass are monovalent phenols such as phenol, p-alkylphenols and para-bromophenol and secondary amines.

### Rubber-like polymer

Examples of the rubber-like polymer which may be blended with resins such as polycarbonate are described in WO-A-2009024496, which is incorporated herein by reference. The rubber- like polymer is or contains an elastomeric (i.e. rubbery) polymer having preferably a Tg less than about 10 °C, more specifically less than about -10 °C, or more specifically about -20 °C to -80 °C.

Preferably, the amount of the rubber-like polymer in the thermoplastic resin a) is 0 to 60 wt%, for example 1 to 50 wt%, 5 to 40 wt% or 10 to 30 wt%, of the amount of the thermoplastic resin a).

Examples of elastomeric polymers include polyisoprene; butadiene based rubbers like polybutadiene, styrene-butadiene random copolymer and block copolymer, hydrogenates of said block copolymers, acrylonitrile-butadiene copolymer and butadiene-isoprene copolymer; acrylate based rubbers like ethylene- methacrylate and ethylene-butylacrylate, acrylate ester-butadiene copolymers, for example acrylic elastomeric polymers such as butylacrylate-butadiene copolymer; siloxane based rubbers like polyorganosiloxanes such as for example polydimethylsiloxane, polymethylphenylsiloxane and dimethyl-diphenylsiloxane copolymer; and other elastomeric polymers like ethylene-propylene random copolymer and block copolymer, copolymers of ethylene and [alpha]-olefins, copolymers of ethylene and aliphatic vinyl such as ethylene-vinyl acetate, and ethylene-propylene non- conjugated diene terpolymers such as ethylene-propylene-hexadiene copolymer, butylene-isoprene copolymer, and chlorinated polyethylene, and these substances may be used individually or in combinations of two or more.

Particularly preferred elastomeric polymers include ABS resin (acrylonitrile- butadienestyrene copolymer), AES resin (acrylonitrile-ethylene-propylene-styrene copolymer), AAS resin (acrylonitrile-acrylic elastomer-styrene copolymer), and MBS (methyl methacrylate butadiene styrene copolymer). Particularly preferred graft copolymers are acrylonitrile butadiene styrene rubber (ABS), methylmethacrylate butadiene styrene rubber (MBS) or a mixture of these copolymers, because of the high compatibility between the polycarbonate matrix and such copolymers, thereby enabling that these copolymers can be uniformly dispersed into the polycarbonate matrix. This decreases any degradation of the thermoplastic resin that may be caused by certain types of component b). From an economic point of view acrylonitrile butadiene styrene (ABS) is even more preferred. Any commercially available ABS may be applied. Particularly preferred acrylonitrile butadiene styrene (ABS) is acrylonitrile butadiene styrene a rubber content of 10 to 50 parts by weight, preferably 10 to 40 parts by weight and even more preferably 10 to 30 parts by weight.

In particularly preferred embodiments, the thermoplastic resin a) is a blend of 45 to 75 wt% of polycarbonate, 5 to 40 wt% of ABS and 0 to 10 wt% of MBS wherein the amounts are with respect to the thermoplastic resin a).

In some embodiments, the rubber is a graft copolymer comprising an elastomeric component containing Si. This has an advantage in the improved flame retardancy of the composition. The graft copolymer is formed by graft-copolymerizing an elastomeric component containing Si with a monomer component copolymerizable therewith. The elastomeric component generally has a glass transition temperature of at most 0 °C, preferably at most -20 °C, more preferably-30 °C.

As the graft copolymer, core/shell type graft copolymers are preferable wherein the core is the elastomeric component containing Si. The elastomeric component containing Si is preferably polyorganosiloxane.

The graft copolymer is preferably a polyorganosiloxane containing graft copolymer preferably prepared by polymerizing 5 to 60 parts by weight of a vinyl monomer (I) in the presence of 40 to 95 parts by weight of polyorganosiloxanes particles (I I) (the sum of (I) and (II) is 100 parts by weight), as for example described in US2005/0143520. Examples of the vinyl monomers (I) include, for example, aromatic vinyl monomers such as styrene, alpha -methylstyrene, p-methylstyrene, and p-butylstyrene; vinylcyanide monomers such as acrylonitrile and methacrylonitrile; (meth)acrylic acid ester monomers such as methyl acrylate, ethyl acrylate, propyl acrylate, butyl acrylate, 2-ethylhexyl acrylate, glycidyl acrylate, hydroxyethyl acrylate, hydroxybutyl acrylate, methyl methacrylate, ethyl methacrylate, butyl methacrylate, lauryl methacrylate, glycidyl methacrylate, and hydroxyethyl methacrylate; and carboxyl-group-containing vinyl monomers such as itaconic acid, (meth)acrylic acid, fumaric acid, and maleic acid. The vinyl monomer (a-I) may include a multifunctional monomer having at least two polymerizable unsaturated bonds per molecule, if necessary. Examples of the multifunctional monomers include allyl methacrylate, triallyl cyanurate, triallyl isocyanurate, diallyl phthalate, ethylene glycol dimethacrylate, 1 ,3-butylene glycol dimethacrylate, and divinylbenzene. The vinyl monomer (I) may be used alone or in combination. The polyorganosiloxane particles (II) are preferably prepared by emulsion polymerization of the constituent components. A normal seeded emulsion polymerization can be applied to the graft copolymerization and can be achieved by radical-polymerizing the vinyl monomer (I) in latex of the polyorganosiloxane particles (II).

These graft copolymers comprising polyorganosiloxane are commercially available, e.g. as Kane Ace MR01 and Kane Ace MR02 from Kaneka Company.

Other suitable graft copolymer comprising an elastomeric component containing Si include Metablen S-2001, Metablen S-2200 and Metablen SX-005 from Mitsubishi Rayon.

In particularly preferred embodiments, the thermoplastic resin a) is a blend of 80 to 99 wt% of polycarbonate and 1 to 20 wt% of the graft copolymer comprising an elastomeric component containing Si, wherein the amounts are with respect to the thermoplastic resin a).

In some embodiments, the thermoplastic resin a) is or comprises a polysiloxane-polycarbonate copolymer. Examples of the polysiloxane-polycarbonate copolymer are described e.g. in US5380795 and WO09040772. This also has an advantage in the improved flame retardancy of the composition.

The amount of a) in the composition of the present invention is 20 to 90 wt%, for example at least 30 wt%, at least 40 wt%, at least 50 wt% or at least 60 wt% and/or at most 85 wt%, at most 80 wt%, at most 75 wt%, at most 70 wt%, at most 67 wt% or at most 65 wt%, with respect to the weight of the total composition.

### b) laser direct structuring additive

The LDS additive comprises b1) a conductive metal oxide as described below and/or b2) calcium copper titanate.

### b1) conductive metal oxide

The conductive metal oxide in the LDS additive has a resistivity of 5 x 10³ Ω·cm or less, preferably 8 x 10² Ω·cm or less, more preferably 7 x 10² Ω·cm or less, even more preferably 5 x 10² Ω·cm or less. The lower limit is not specifically defined, but can be, for example, 1 x 10¹ Ω·cm or more, more particularly 1 x 10² Ω·cm or more.

As used herein, the resistivity of the conductive oxide typically refers to the powder resistivity, which can be measured with the tester "model 3223" from Yokogawa Electric Corporation by loading 10 g of fine powder of the conductive oxide into a cylinder having an internal diameter of 25 mm coated with Teflon^{®} on the inside and pressurizing it at 100 kg/cm² (packing density 20 %).

The conductive metal oxide contains at least a metal of Group n of the periodic table and a metal of Group n+1 of the periodic table, wherein n is an integer of 3 to 13. The conductive metal oxide contains at least a metal of Group 3 and a metal of Group 4, a metal of Group 4 and a metal of Group 5, a metal of Group 5 and a metal of Group 6, a metal of Group 6 and a metal of Group 7, a metal of Group 7 and a metal of Group 8, a metal of Group 8 and a metal of Group 9, a metal of Group 9 and a metal of Group 10, a metal of Group 10 and a metal of Group 11, a metal of Group 11 and a metal of Group 12, a metal of Group 12 and a metal of Group 13, or a metal of Group 13 and a metal of Group 14.

Suitable metals of Group n or Group n+1 of the periodic table include, for example, Group 4 (titanium, zirconium and the like), Group 5 (vanadium, niobium and the like), Group 6 (chromium, molybdenum and the like), Group 7 (manganese and the like), Group 8 (iron, ruthenium and the like), Group 9 (cobalt, rhodium, iridium and the like), Group 10 (nickel, palladium, platinum), Group 11 (copper, silver, gold and the like), Group 12 (zinc, cadmium and the like), Group 13 (aluminum, gallium, indium and the like).

Suitable metals of Group n of the periodic table further include metals of Group 3 (scandium, yttrium).

Suitable metals of Group n+1 of the periodic table further include metals of Group 14 (germanium, tin and the like).

Preferably, n is an integer of 10 to 13, more preferably 12 or 13, most preferably 12.

Preferably, the conductive metal oxide comprises a metal of Group 12 and a metal of Group 13.

Preferably, the amount of the metal of Group n with respect to the total of the metal of Group n and the metal of Group n+1 in the conductive metal oxide is 15 mol% or less, more preferably 12 mol% or less, especially preferably 10 mol% or less, or the amount of the metal of Group n+1 with respect to the total of the metal of Group n and the metal of Group n+1 in the conductive metal oxide is 15 mol% or less, more preferably 12 mol% or less, especially preferably 10 mol% or less. The lower limit is not specifically defined, but should be 0.0001 mol% or more. Particularly preferably, the conductive metal oxide is an oxide of a metal of Group n doped with a metal of Group n+1. A high platability is obtained.

Further, the metal of Group n and the metal of Group n+1 of the periodic table described above preferably account for 98 % by weight or more of metal components contained in the conductive metal oxide.

Particularly preferably, the conductive metal oxide comprises zinc and aluminum. Most preferably, the conductive metal oxide is an aluminum-doped zinc oxide.

In some preferred embodiments, b) comprises or is particles of b1). The amount of the particles of b1) with respect to the amount of b) may e.g. be 10 to 100 wt%, preferably at least 50 wt%, at least 60 wt%, at least 70 wt%, at least 80 wt%, at least 90 wt%, at least 95 wt%, at least 98 wt%, at least 99.0 wt%, at least 99.5 wt%, at least 99.9 wt% or 100 wt%.

### b2) calcium copper titanate

The LDS additive may comprise b2) calcium copper titanate.

In some preferred embodiments, b) comprises or is particles of b2). The amount of the particles of b2) with respect to the amount of b) may e.g. be 10 to 100 wt%, preferably at least 50 wt%, at least 60 wt%, at least 70 wt%, at least 80 wt%, at least 90 wt%, at least 95 wt%, at least 98 wt%, at least 99.0 wt%, at least 99.5 wt%, at least 99.9 wt% or 100 wt%.

### Further components of b)

In some preferred embodiments, b) comprises or is particles consisting of a core and a shell covering the core, wherein the shell is made of b1) and/or b2). The core is preferably made of a material having a high dielectric constant. The weight ratio between the core and the shell may be any value as long as b1) and/or b2) works as the LDS additive, for example 1:2 to 100:1. With respect to the amount of b), the amount of the particles consisting of a core and a shell covering the core wherein the shell is made of b1) and/or b2) may e.g. be 10 to 100 wt%, for example at least 50 wt%, at least 60 wt%, at least 70 wt%, at least 80 wt%, at least 90 wt%, at least 95 wt%, at least 98 wt%, at least 99.0 wt%, at least 99.5 wt%, at least 99.9 wt% or 100 wt%.

In some preferred embodiments, b) consists either of particles of b1) and/or b2) or of particles consisting of a core and a shell covering the core, wherein the shell is made of b1) and/or b2). b) may also consist of particles of b1) and/or b2) and particles consisting of a core and a shell covering the core, wherein the shell is made of b1) and/or b2).

Thus, in these preferred embodiments, the composition does not comprise a material having a laser direct structuring additive function other than b1) and/or b2). For example, the composition may comprise less than 0.1 wt% or less than 0.05 wt% of a heavy metal mixture oxide spinel, such as copper chromium oxide spinel; a copper salt, such as copper hydroxide phosphate copper phosphate, copper sulfate, cuprous thiocyanate; or a combination including at least one of the foregoing LDS additives. For example, the composition may comprise less than 0.1 wt% or less than 0.05 wt% of an LDS additive which is not particles of b1) and/or b2) or particles consisting of a core and a shell covering the core, wherein the shell is made of b1) and/or b2), with respect to the total composition.

The terms "laser direct structuring additive" and "material having a laser direct structuring additive function" are understood to mean a material capable of forming a plated layer on an article made by 1) moulding a specimen made by adding 10 parts by weight of a candidate material of the LDS additive to 100 parts by weight of a thermoplastic resin for example polycarbonate, 2) irradiating the specimen by a laser and 3) subjecting the irradiated specimen to electroless plating. For example, step 2) may be irradiating the specimen to YAG laser of 1064 nm wavelength at an output of 13 W, a frequency of 20 kHz. and scanning speed of 2 m/s. For example, step 3) may be subjecting the irradiated specimen to electroless plating using a MID Copper 100 XB Strike plating bath (from MacDermid Performance Solutions).

When b) consists of particles consisting of a core and a shell covering the core, wherein the shell is made of b1) and/or b2), the core is preferably selected such that it contributes to achieving desired radio frequency performances of the composition according to the invention.

Preferably, the core is made of a ceramic material, preferably selected from metal oxides, metal silicates, metal borides, metal carbides and metal nitrides.

Suitable examples of the metal oxides include magnesium oxide, titanium oxide (e.g. TiO2), zinc oxide, copper oxide, cerium oxide, niobium oxide, tantalum oxide, yttrium oxide, zirconium oxide, aluminum oxide (e.g., alumina and/or fumed alumina), CaTiO3, MgZrSrTiO6, MgTiO3, MgAl2O4, BaZrO3, BaSnO3, BaNb206, BaTa2O6, WO3, MnO2, SrZrO3, SnTiO4, ZrTiO4, CaZrO3, CaSnO3, CaWO4, MgTa2O6, MgZrO3, La2O3, CaZrO3, MgSnO3, MgNb2O6, SrNb2O6, MgTa2O6, Ta2O3,
barium titanate (BaTiO3), strontium titanate (SrTiO3), barium strontium titanate, strontium-doped lanthanum manganate, lanthanum aluminum oxides (LaAlO3), cadmium copper titanate (CdCu3Ti4O12), Ca₁₋ₓLaₓMnO3, (Li, Ti) doped NiO, lanthanum strontium copper oxides (LSCO), yttrium barium copper oxides (YBa2Cu3O7), lead zirconate titanate and lanthanum-modified lead zirconate titanate.

Examples of silicates are Na2SiO3, LiAlSiO4, Li4SiO4, BaTiSi3O9, Al2Si2O7, ZrSiO4, KAlSi3O8, NaAlSi3O8, CaAl2Si2O8, CaMgSi2O6 and Zn2SiO4. It is noted that mica and talc are not preferred as the core, since they do not contribute to achieving desired radio frequency performances.

Examples of borides are lanthanum boride (LaB6), cerium boride (CeB6), strontium boride (SrB6), aluminum boride, calcium boride (CaB6), titanium boride (TiB2), zirconium boride (ZrB2), vanadium boride (VB2), tantalum boride (TaB2), chromium borides (CrB and CrB2), molybdenum borides (MoB2, Mo2B5 and MoB) and tungsten boride (W2B5).

Examples of carbides are silicon carbide, tungsten carbide, tantalum carbide, iron carbide and titanium carbide.

Examples of nitrides include silicon nitride, boron nitride, titanium nitride, aluminum nitride and molybdenum nitride.

Preferably, the core is made of a ceramic material selected from metal oxides, metal borides, metal carbides and metal nitrides.

Preferably, the core is made of a metal oxide, more preferably titanium dioxide and/or barium titanate, most preferably titanium dioxide.

Preferably, the amount of b1), b2) or the total of b1) and b2) is at least 0.1 wt% and at most 80 wt% with respect to the total composition. Preferably, the amount of b1), b2) or the total of b1) and b2) is at least 1.0 wt%, at least 3.0 wt%, at least 5.0 wt%, at least 10 wt%, at least 15 wt%, at least 16 wt%, at least 17 wt%, at least 18 wt%, at least 19 wt%, at least 20 wt%, at least 25 wt%, at least 30 wt%, at least 31 wt%, at least 32 wt%, at least 33 wt%, at least 34 wt% or at least 35 wt%, with respect to the total composition. Preferably, the amount of b1), b2) or the total of b1) and b2) is at most 75 wt%, at most 70 wt%, at most 65 wt% or at most 60 wt%, with respect to the total composition. The higher amount of b1), b2) or the total of b1) and b2) leads to a better radio frequency performance.

Preferably, the amount of b) is at least 0.1 wt% and at most 80 wt% with respect to the total composition. Preferably, the amount of b) is at least 1.0 wt%, at least 3.0 wt%, at least 5.0 wt%, at least 10 wt%, at least 15 wt%, at least 16 wt%, at least 17 wt%, at least 18 wt%, at least 19 wt%, at least 20 wt%, at least 25 wt%, at least 30 wt%, at least 31 wt%, at least 32 wt%, at least 33 wt%, at least 34 wt% or at least 35 wt%, with respect to the total composition. Preferably, the amount of b) is at most 75 wt%, at most 70 wt%, at most 65 wt% or at most 60 wt%, with respect to the total composition.

Preferably, the LDS additive has a particle size d90 of at most 8 µm, more preferably at most 5 µm, more preferably at most 4 µm, more preferably at most 2 µm, as determined by light scattering technology.

Preferably, the LDS additive has a particle size d50 of at most 5 µm, more preferably at most 4 µm, more preferably at most 2 µm, as determined by light scattering technology

The LDS additive having a smaller size was found to give a good mechanical strength to the composition according to the present invention.

The particle size may e.g. be determined by light scattering technology using a Malvern Mastersize particle size analyzer. This may be done according to e.g. ISO13320-1:2009.

In some embodiments, b) may further comprise a material having a laser direct structuring additive function, which is preferably a metal compound selected from the group consisting of:
copper containing spinels such as copper chromium oxide spinel, copper molybdenum oxide spinel and copper chromium manganese oxide spinel;
copper salts, such as copper hydroxide, phosphate copper phosphate, copper sulfate, cuprous thiocyanate;
organic metal complexes, such as palladium/palladium-containing heavy metal complexes;
tin containing oxides, such as antimony tin oxide (antimony-doped tin oxide), bismuth tin oxide (bismuth-doped tin oxide), aluminum tin oxide (aluminum-doped tin oxide) and molybdenum tin oxide (molybdenum-doped tin oxide);
ZnₓNi_{1-X}Fe₂O₄, wherein the x is higher than 0.60 and lower than 0.85 and
combinations thereof.

When present, the amount of the further material having a laser direct structuring additive function is typically 0.1 to 10 wt% for example 1.0 to 5.0 wt%, with respect to the total composition.

In some embodiments, the composition according to the invention is substantially free of a further material having a laser direct structuring additive function other than b1) or b2). For example, the composition may comprise less than 0.1 wt%, less than 0.05 wt% or less than 0.01 wt% of a metal compound selected from the group consisting of: copper containing spinels such as copper chromium oxide spinel, copper molybdenum oxide spinel and copper chromium manganese oxide spinel; copper salts, such as copper hydroxide, phosphate copper phosphate, copper sulfate, cuprous thiocyanate; organic metal complexes, such as palladium/palladium-containing heavy metal complexes; tin containing oxides, such as antimony tin oxide (antimony-doped tin oxide), bismuth tin oxide (bismuth-doped tin oxide), aluminum tin oxide (aluminum-doped tin oxide) and molybdenum tin oxide (molybdenum-doped tin oxide); ZnₓNi_{1-X}Fe₂O₄, wherein the x is higher than 0.60 and lower than 0.85; and combinations thereof.

### c) ceramic filler particles which do not have a laser direct structuring additive function

The composition according to the invention may further comprise component c), which is particles of a ceramic material which does not have an LDS additive function.

Preferably, the amount of c) with respect to the total composition is at most 75 wt%, for example at most 60 wt%, at most 50 wt% or at most 40 wt%. Preferably, the amount of c) is at most 30 wt% with respect to the total composition. When the amount of c) is at most 30 wt%, a desirable flame retardancy can be obtained.

The amount of c) may also be at most 20 wt%, less than 10 wt% or at most 9 wt% with respect to the total composition. The amount of c) may be 0 wt% with respect to the total composition. It is advantageous that desirable properties can be obtained without using a substantial amount of ceramic filler particles.

However, it may also be advantageous if the composition according to the invention comprises some amounts of c), since c) is more cost effective than b) for the purpose of obtaining desirable dielectric properties. Further, c) may improve the mechanical properties of the composition such as impact strength more efficiently than b). Preferably, the amount of c) with respect to the total composition is at least 0.1 wt%, at least 1.0 wt%, at least 3.0 wt%. In some embodiments, the amount of c) with respect to the total composition is at least 0.1 wt% and less than 10 wt%. In some embodiments, the amount of c) with respect to the total composition is at least 10 wt% and at most 27 wt%.

In the present specification, the term "particles of a material" is understood as a particulate component consisting of the material, irrespective of the shape (spherical, whisker, fibrous etc). This term is used to be distinguished from the cores of the core-shell particles described in relation to component b).

Preferably, the ceramic material is selected from metal oxides, metal silicates, metal borides, metal carbides and metal nitrides.

Preferably, the ceramic material is selected from metal oxides, metal borides, metal carbides and metal nitrides.

Preferably, the ceramic material is a metal oxide, more preferably one or more selected from the group consisting of titanium dioxide, barium titanate, barium strontium titanate.

In some preferred embodiments, at least 80 wt% of the ceramic filler particles which do not have a laser direct structuring additive function present in the composition according to the invention is titanium dioxide. This results in the composition having a low loss tangent at high frequencies. Preferably, the amount of titanium dioxide with respect to the ceramic filler particles which do not have a laser direct structuring additive function present in the composition according to the invention is at least 90 wt%, at least 95 wt%, at least 99 wt% or 100 wt%.

In some preferred embodiments, at least 80 wt% of the ceramic filler particles which do not have a laser direct structuring additive function present in the composition according to the invention is barium titanate. Preferably, the amount of barium titanate with respect to the ceramic filler particles which do not have a laser direct structuring additive function present in the composition according to the invention is at least 90 wt%, at least 95 wt%, at least 99 wt% or 100 wt%.

In some preferred embodiments, at least 80 wt% of the ceramic filler particles which do not have a laser direct structuring additive function present in the composition according to the invention is barium strontium titanate. This results in the composition having an exceptionally high flame retardancy. Preferably, the amount of barium strontium titanate with respect to the ceramic filler particles which do not have a laser direct structuring additive function present in the composition according to the invention is at least 90 wt%, at least 95 wt%, at least 99 wt% or 100 wt%.

Preferably, the total amount of b1), b2) and c) with respect to the total composition is at least 35 wt%, more preferably at least 40 wt%. This leads to a high dielectric constant. Preferably, the total amount of b1), b2) and and c) with respect to the total composition is at most 70 wt% or at most 65 wt%.

Preferably, the total amount of b) and c) with respect to the total composition is at least 35 wt%, more preferably at least 40 wt%. Preferably, the total amount of b) and c) with respect to the total composition is at most 70 wt% or at most 65 wt%.

Preferably, the weight ratio of the total amount of b1) and b2) in the composition to the amount of c) in the composition is at least 1.0, preferably at least 1.2, at least 1.5, at least 1.8, at least 2.0, at least 2.5, at least 3.0, at least 3.5 or at least 4.0.

Preferably, the weight ratio of the amount of b) in the composition to the amount of c) in the composition is at least 1.0, preferably at least 1.2, at least 1.5, at least 1.8, at least 2.0, at least 2.5, at least 3.0, at least 3.5 or at least 4.0.

### Total of a), b) and c)

Preferably, the total amount of the components a), b) and c) is 90 to 99.9 wt%, for example 95 to 99 wt%, of the total composition.

### d) acid-modified polymer

The acid-modified polymer may be polymers obtained by modifying a polymer with a compound having a functional group, such as an unsaturated carboxylic acid.

Preferably, the acid-modified polymer is an acid-modified olefin polymer or an acid-modified styrene polymer, more preferably an acid-modified olefin polymer.

The olefin polymer is preferably a polyethylene or polypropylene.

The olefin polymer preferably has a weight-average molecular weight of 1,000 to 5,000.

Preferably, the acid-modified polymer is a polymer modified by an unsaturated carboxylic acid , preferable selected from the group consisting of acrylic acid, maleic acid, itaconic acid, maleic anhydride, itaconic anhydride and maleic acid monoamide.

Most preferably, the acid-modified olefin polymer is a maleic anhydride-modified polyethylene.

Suitable examples include commercially available Mitsui Hi-WAX 1105A, manufactured by Mitsui Chemicals, Inc., Mv 1500, Density 940 kg/m3, acid value: 60 KOHmg/g.

The amount of d) is with respect to the total composition is 0.1 to 5.0 wt%, preferably 0.3 to 3.0 wt%, more preferably 0.5 to 1.5 wt%.

### Total of a), b), c) and d)

Preferably, the total amount of the components a), b), c) and d) is 90 to 100 wt% of the total composition, for example 90 to 99.9 wt%, 92 to 99.0 wt% or 95 to 98 wt%, with respect to the total composition. Preferably, the total amount of the components a), b), c) and d) is at least 96 wt%, at least 97 wt%, at least 98 wt% or at least 99 wt%, with respect to the total composition.

### e) flame retardant

Preferably, the thermoplastic composition according to the invention further comprises e) a flame retardant.

Preferably, the amount of the component e) with respect to the total composition is 0 to 15 wt%, for example at least 0.01 wt%, at least 0.05 wt% or at least 0.1 wt% and/or at most 10 wt%, at most 5 wt% or at most 1.0 wt%.

The flame retardant may be an inorganic flame retardant or an organic flame retardant.

Examples of inorganic flame retardants include sulfonate salts such as potassium perfluorobutane sulfonate (Rimar salt) and potassium diphenylsulfone sulfonate; salts formed by reacting for example an alkali metal or alkaline earth metal (preferably lithium, sodium, potassium, magnesium, calcium and barium salts) and an inorganic acid complex salt, for example, an oxo-anion, such as alkali metal and alkaline-earth metal salts of carbonic acid, such as Na2CO3, K2CO3. MgCO3, CaCO3, BaCO3, and BaCO3 or fluoro-anion complex such as Li3AIF6, BaSiF6, KBF4, K3AIF6, KAIF4, K2SiF6, and/or Na3AIF6or the like. Inorganic flame retardants are advantageous for the purpose of maintaining Vicat temperature.

Examples of organic flame retardants include an organic phosphate and/or an organic compound containing phosphorus-nitrogen bonds.

One type of exemplary organic phosphate is an aromatic phosphate of the formula (GO)₃P=O, wherein each G is independently an alkyl, cycloalkyl, aryl, alkaryl, or aralkyl group, provided that at least one G is an aromatic group. Two of the G groups may be joined together to provide a cyclic group, for example, diphenyl pentaerythritol diphosphate, which is described by Axelrod in U.S. Pat. No. 4,154,775. Other suitable aromatic phosphates may be, for example, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphates, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below: 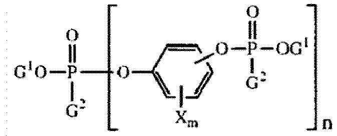 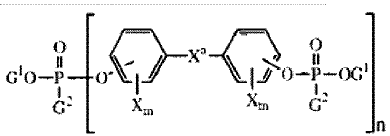 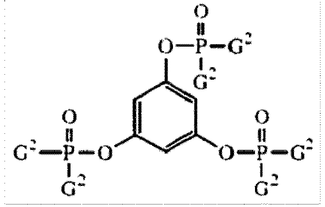 wherein each G¹ is independently a hydrocarbon having 1 to 30 carbon atoms; each G² is independently a hydrocarbon or hydrocarbonoxy having 1 to 30 carbon atoms; each X is independently a bromine or chlorine; m 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A (. respectively, their oligomeric and polymeric counterparts, and the like. Methods for the preparation of the aforementioned di- or polyfunctional aromatic compounds are described in British Patent No. 2,043,083.

The thermoplastic compositions of the present invention may be essentially free of chlorine and bromine, particularly chlorine and bromine flame-retardants, which may be defined as having a bromine and/or chlorine content of less than 100 ppm, less than 75 ppm or less than 50 ppm with respect to the total composition.

Preferably, a molded part of the composition has at least UL94 V2 rating (i.e. V2, V1 or V0 rating) at a thickness of 3.0 mm (±10%).

Preferably, a molded part of the composition has at least UL94 V2 rating (i.e. V2, V1 or V0 rating) at a thickness of 1.5 mm (±10%).

It was observed that the LDS additive used in the present invention allows achieving a desired UL94 rating, unlike other types of the LDS additive. It was further surprisingly found that the addition of the acid-modified polymer according to the invention does not have a substantial detrimental effect on the flame retardancy. The desired UL94 rating can thus be achieved by the present invention by the addition of a flame retardant in an appropriate amount.

### Total of a), b), c), d) and e)

Preferably, the total amount of the components a), b), c), d) and e) is is 90 to 100 wt% of the total composition, for example 90 to 99.9 wt%, 92 to 99.0 wt% or 95 to 98 wt%, with respect to the total composition. Preferably, the total amount of the components a), b), c), d) and e) is at least 96 wt%, at least 97 wt%, at least 98 wt% or at least 99 wt%, with respect to the total composition.

### Component f) anti-drip agent

The thermoplastic composition according to the invention may further comprise f) an anti-drip agent.

Preferably, the amount of the component f) is 0-2.0 wt% or 0.05-2.0 wt%, more preferably 0.1-1.5 wt%, more preferably 0.2-1.0 wt%, with respect to the total composition. The presence of the component f) is optional, and hence the composition according to the invention may comprise little or no component f). For example, the amount of the component f) may be less than 0.05 wt%, less than 0.01 wt% or 0 wt%, with respect to the total composition.

Suitable examples of anti-drip agents include fluoropolymers such as polytetrafluoroethylene (PTFE). The fluoropolymers may be a fibril forming fluoropolymer such as fibril forming polytetrafluoroethylene (PTFE) or a non-fibril forming fluoropolymer such as non-fibril forming polytetrafluoroethylene.

The anti-drip agent may be in the form of an (aqueous) dispersion of a fluoropolymer. In this case, the dispersion contains a sufficient amount of a fluoropolymer, e.g. at least 30 wt% or at least 50 wt% of the dispersion.

The anti-drip agent may be in the form of a mixture of a fluoropolymer and a further polymer, for example an encapsulated fluoropolymer. In this case, the dispersion contains a sufficient amount of a fluoropolymer, e.g. at least 30 wt% or at least 50 wt% of the mixture. The further polymer may e.g. be an acrylate copolymer or styreneacrylonitrile. An example of a mixture of a fluoropolymer and an acrylate polymer is commercially available as METABLEN A-3800 from Mitsubishi Rayon. An encapsulated fluoropolymer may be made by polymerizing the polymer in the presence of the fluoropolymer.

Preferably, the anti-drip agent is a mixture of a fluoropolymer and a further polymer, such as an encapsulated fluoropolymer. Such anti-drip can be handled better compared to an anti-drip agent in the form of a dispersion, since the feeding in an extruder is easier and no removal of water from the composition is required.

### Total of a), b), c), d), e) and f)

Preferably, the total amount of the components a), b), c), d), e) and f) is is 90 to 100 wt% of the total composition, for example 90 to 99.9 wt%, 92 to 99.0 wt% or 95 to 98 wt%, with respect to the total composition. Preferably, the total amount of the components a), b), c), d), e) and f) is at least 96 wt%, at least 97 wt%, at least 98 wt% or at least 99 wt%, with respect to the total composition.

### Other additives g)

The thermoplastic composition according to the invention may further comprise g) 0 to 10 wt% of one or more other additives, relative to the total weight of the composition. These include the customary additives such as stabilizers against thermal or thermo-oxidative degradation, stabilizers against hydrolytic degradation, stabilizers against degradation from light, in particular UV light, and/or photo-oxidative degradation and processing aids such as release agents and lubricants. Suitable examples of such additives and their customary amounts are stated in the aforementioned Kunststoff Handbuch, 3/1. The total amount of the additives is typically 0 to 5 wt%, for example 0.1 to 3 wt% or 0.3 to 1 wt%.

### Total of a), b), c), d), e), f) and g)

Preferably, the total amount of the components a), b), c), d), e), f) and g) is 100 wt% of the total composition.

### Glass fillers h)

The composition according to the invention may or may not further comprise h) glass fillers such as glass fibers. It will be appreciated that h) glass fillers are different from c) ceramic filler particles which do not have a laser direct structuring additive function.

In some embodiments, the composition according to the invention comprises less than 5 wt%, preferably less than 4 wt%, less than 3 wt%, less than 2 wt%, less than 1 wt%, less than 0.5 wt%, less than 0.1 wt% or 0 wt% of glass fillers such as glass fibers, relative to the total weight of the composition.

Preferably, the total amount of the components a), b), c), d), e), f), g) and h) is 100 wt% of the total composition.

It will be appreciated that g) additives are different from e) flame retardant, f) anti-dripping agent and h) glass fillers, i.e. g) additives do not include e) flame retardant, f) anti-dripping agent and h) glass fillers.

The components b) and d) and optional components as described above may be introduced into the thermoplastic resin a) by means of suitable mixing devices such as single-screw or twin-screw extruders, preferably a twin-screw extruder is used. Preferably, thermoplastic resin pellets are introduced into the extruder together with at least components b) and d) and extruded, then quenched in a water bath and then pelletized. The invention therefore further relates to a process for producing a thermoplastic composition according to the present invention by melt mixing components a) and b) and d) and optional components as described above.

### Properties

Preferably, the composition has a dielectric constant measured at 1 GHz of at least 4.0 and/or at 6 GHz of at least 4.0. Such DC can be achieved by selecting appropriate amounts of b1) and/or b2) and the optional component c).

Preferably, the composition according to the invention has a dielectric constant measured at 1 GHz of at least 4.0, more preferably at least 4.2, more preferably at least 4.5, more preferably at least 4.7, more preferably at least 5.0.

Preferably, the composition according to the invention has a tangent loss (Df) measured at 1 GHz of at most 0.014, more preferably at most 0.010, more preferably at most 0.007. A low Df minimizes energy loss (heat) and/or maximizes the energy radiated.

Preferably, the composition according to the invention has a dielectric constant measured at 6 GHz of at least 4.0, preferably at least 4.2, more preferably at least 4.5, more preferably at least 4.7, more preferably at least 5.0.

Preferably, the composition according to the invention has a tangent loss measured at 6 GHz of at most 0.014, more preferably at most 0.010, more preferably at most 0.007.

Preferably, the composition according to the invention has a dielectric constant measured at 40 GHz of at least 3.5, more preferably at least 4.0, preferably at least 4.2, more preferably at least 4.5, more preferably at least 4.7, more preferably at least 5.0.

Preferably, the composition according to the invention has a tangent loss measured at 40 GHz of at most 0.014, preferably at most 0.010, more preferably at most 0.007.

Preferably, the thermoplastic resin has a melt flow rate measured according to ISO1133-1:2011 at 300 °C and 1.2 kg of MFR1 and the composition according to the invention has a melt flow rate measured according to ISO1133-1:2011 at 300 °C and 1.2 kg of MFR2, wherein MFR2 is at most 130% of MRF1.

### Other aspects

The invention further relates to a molded part comprising the thermoplastic composition according to the present invention. The invention relates in particular to a molded part produced by injection moulding of the composition according to the invention. The invention further also relates to an article, in particular a circuit carrier, that contains a molded part produced from the composition according to the invention and a conductive track provided thereon. In one embodiment, such a circuit carrier is used for producing an antenna.

The invention further relates to a process for producing such a circuit carrier, which process comprises the steps of providing a molded part comprising the thermoplastic composition according to the present invention, irradiating areas of said part on which conductive tracks are to be formed with laser radiation, and subsequently metallizing the irradiated areas. In a preferred embodiment, the laser irradiation is used to simultaneously release metal nuclei and effect ablation of the part while forming an adhesion-promoting surface. This provides a simple means to achieve excellent adhesive strength of the deposited metallic conductor tracks. The wavelength of the laser is advantageously 248 nm, 308 nm, 355 nm, 532 nm, 1064 nm or of even 10600 nm. The deposition of further metal onto the metal nuclei generated by laser radiation preferably takes place via plating processes. Said metallization is preferably performed by immersing the molded part in at least one electroless plating bath to form electrically conductive pathways on the irradiated areas of the molded part. Non-limiting examples of electroless plating processes are a copper plating process, gold plating process, nickel plating process, silver plating, zinc plating and tin plating. Preferably, the first plating is copper plating. The conductive track may have one or more layers. The first layer may e.g. be a copper layer and may be 8-16 µm, more typically 8-12 µm. If present, the second layer may e.g. be a nickel layer and may be 2-4 µm. If present, the third layer may be e.g. be a gold layer and may be 0.05-0.2 µm.
The irradiation of the molded part may e.g. be performed under conditions comprising a power of 2-15W, a frequency of 20-100 kHz and/or a speed of 1-5 m/s.

The irradiation of the molded part may e.g. be performed by UV light having a wavelength from 100 to 400 nm, visible light having a wavelength from 400 to 800 nm, or infrared light having a wavelength from 800 to 25 000 nm.

When the irradiation of the molded part is performed by UV light having a wavelength from 100 to 400 nm, it may be preferable that the molded part with the metallized areas is subjected to thermal processing for improving the delamination resistance. The thermal processing may be performed by subjecting the molded part to microwave e.g. by placing the molded part in a microwave oven. Preferably, the irradiation of the molded part is performed by visible light having a wavelength from 400 to 800 nm, or infrared light having a wavelength from 800 to 25 000 nm. These types of laser radiation are advantageous in that the metal layer on the irradiated areas has a relatively stronger adhesion strength without requiring thermal processing after the plating step. Most preferably, the irradiation of the molded part is performed by infrared light having a wavelength from 800 to 25 000 nm, in particular 1064 nm.

Preferably, the process for producing the circuit carrier does not comprise a step of thermal processing after the step of metallizing the irradiated areas. This is advantageous in view of allowing an efficient process.

A further aspect of the present invention relates to the thermoplastic composition according to the invention for use in a laser direct structuring process.

A further aspect of the present invention relates to use of the thermoplastic composition according to the invention in a laser direct structuring process.

It is noted that the invention relates to the subject-matter defined in the independent claims alone or in combination with any possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein. It will therefore be appreciated that the combinations of the features relating to the moulding step, the irradiating step and the metallizing step of the process of the invention and the features relating to the composition according to the invention are described herein. For example, the present description discloses a process for producing a circuit carrier, comprising providing the molded part comprising the thermoplastic composition according to the invention; irradiating areas of said part on which conductive tracks are to be formed with laser radiation; and subsequently metalizing the irradiated areas, wherein the composition comprises component d) and the irradiation of the molded part is performed by infrared light having a wavelength from 800 to 25 000 nm.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

### Experiments

Comparative experiments (CEx) and example compositions (Ex) were prepared from the components as given in Table 1.

All sample compositions were prepared according the amounts as given in Tables 2 to 4. All amounts are in weight percentage. In each of the experiments, samples were extruded on a co-rotating twin screw extruder at a temperature of 280°. The extrudate was granulated and the collected granulate was dried for 4 hours at a temperature of 110°C and subsequently injection moulded into test parts, using a melt temperature of approximately 290°C-300°C.

The Radio Frequency properties - Dielectric Constant (DC) and Dissipation Factor (DF) - were measured at 6 GHz using the guidelines of ASTM D-2520, Method B - Resonant Cavity Perturbation Technique. Nominal sample size of the test samples was 1.78*2.54*25.4 mm. Testing was done at laboratory ambient conditions (23°C and 51% RH nominal.)

Flammability performance was determined according to UL 94 V method after samples have been stored for 48 hours at 23°C and 50% Relative Humidity. For each sample 5 test bars were tested. Besides the UL 94 V rating (V-0, V-1, V-2 or NC (=No Class)) also the total flame-out-time (FOT), which is the sum of the after flame time of the first (t1) and second (t2) flame contact of the 5 bars tested, is recorded.

The degree of degradation of the resin after compounding was identified by measuring the Melt mass-Flow Rate (MFR) of the resin before compounding and of the composition prepared by the compounding of the resin according to ISO 1133 at 300°C / 1.2 kg. The presence of the ceramic fillers in the composition generally leads to a lower MFR. Accordingly, if no polymer degradation would have occurred during compounding, the MFR of the composition would typically be lower than that of the resin. An increased MFR after compounding is therefore attributed to the degradation of the resin.

The degree of degradation of the resin after compounding was further confirmed by measuring the Vicat temperature and Izod notched impact strength of the resin before compounding and of the composition prepared by the compounding of the resin. A decreased Vicat temperature and a decreased impact strength are both attributed to the degradation of the resin.

**Table 1**

| **Material** | **Type** | **Supplier** |
|---|---|---|
| PC | PC with MFR at 300°C / 1.2 kg (ISO 1133) = 9.5 dg/min | MEP |
| AZO | 23-KT (aluminium doped zinc oxide) | Hakusui |
| CCTO | Calcium Copper Titanate | Thermograde |
| CuCr | LD5 (CuCr₂O₄) | Shepherd Technologies |
| ATO | Stanostat CP5C ((Sn/Sb)O2) | Keeling & Walker |
| Wax | Hi-Wax 1105A | Mitsui |
| TiO2 | Kronos 2233 | Kronos |
| BST | Barium Strontium Titanate | Thermograde |
| FR Salt 1 | RM65 | Miteni |
| FR Salt 2 | KSS (potassium salt of diphenyl sulfone sulfonate) | Arichem |
| Heat Stab | ADK Stab 2112 | Adeka |
| Mold Release | Loxiol P 861/3.5 | Emery |
| PTFE | DISP 40 | Chemours |
| MZP | Z 21-82 (Mono Zinc Phosphate) | Budenheim |

**Table 2**

| **Sample** | | **CEx.1** | **CEx.2** | **CEx.3** | **CEx. 4** |
|---|---|---|---|---|---|
| Component | Unit | | | | |
| PC (MFR=9.5) | wt% | 59.1 | 59.10 | 59.10 | 59.10 |
| CuCr | wt% | 5 | | 35 | |
| ATO | wt% | | 5 | | 35 |
| TiO2 | wt% | 35 | 35 | 5 | 5 |
| Heat Stab | wt% | 0.05 | 0.05 | 0.05 | 0.05 |
| Mold Release | wt% | 0.15 | 0.15 | 0.15 | 0.15 |
| FR Salt 1 | wt% | 0.20 | 0.20 | 0.20 | 0.20 |
| PTFE | wt% | 0.30 | 0.30 | 0.30 | 0.30 |
| SUM | wt% | 100.00 | 100.00 | 100.00 | 100.00 |

| Properties | | | | | |
|---|---|---|---|---|---|
| MFR @ 300°C/1.2kg | dg/min | 5.1 | 4.1 | 9.1 | 23.1 |
| MV @ 300°C/1500s-1 | Pa.s | 322 | 251 | 241 | 144 |
| Vicat Temp | °C | 146.8 | 145.6 | 145.9 | 145.1 |
| Izod Notched | kJ/m² | 37 | 32 | 41 | 26 |
| UL @ 1.5 mm | - | NC | NC | V0 | NC |
| DC @ 6 GHz | - | 4.3 | 4.5 | 3.6 | 4.3 |
| DF @ 6 GHz | - | 0.006 | 0.006 | 0.006 | 0.007 |

Table 2 shows the results of using most commonly used LDS additives, Copper Chromium Oxide Spinel and Antimony doped Tin Oxide.

In CEx. 1 and CEx. 2 in which small amounts of the LDS additives were used, the MFR of the composition is lower than the resin, indicating that no excessive degradation of the resin has occurred. The same conclusion can be drawn from the values of MV at high shear viscosity, Vicat temperature and Izod Notched Impact strength.

In in CEx 1 and CEx 2, desirable dielectric properties were obtained, particularly the dielectric constant is at least 4.0 at 6 GHz.

However, in CEx 1 and CEx 2, desirable frame retardancy was not obtained.

In CEx. 3 in which a large amount of CuCr was used, it can be understood that no excessive degradation of the resin has occurred. However, the dielectric constant is not very high, below 1.0 at 6 GHz. A desirable flame retardancy was obtained.

In CEx. 4 in which a large amount of ATO was used, it can be understood that an excessive degradation of the resin has occurred. The MFR of the composition is more than 200% of the MFR of the resin. Also, although desirable dielectric properties were obtained, a desirable flame retardancy was not obtained.

It can therefore be concluded that the use of copper chromite or ATO does not result in a combination of desirable properties.

**Table 3**

| **Sample** | | **CEx.5** | **Ex. 1** | **Ex. 2** | **Ex. 3** | **CEx.6** |
|---|---|---|---|---|---|---|
| Component | Unit | wt% | wt% | wt% | wt% | wt% |
| PC (MFR=9.5) | wt% | 59.30 | 58.30 | 58.30 | 58.30 | 58.3 |
| AZO | wt% | 35 | 35 | 25 | 25 | |
| ATO | wt% | | | | | 35 |
| TiO2 | wt% | 5 | 5 | 20 | 10 | 5 |
| BST | wt% | | | | 10 | |
| Heat Stab | wt% | 0.05 | 0.05 | 0.05 | 0.05 | 0.05 |
| Mold Release | wt% | 0.15 | 0.15 | 0.15 | 0.15 | 0.15 |
| FR Salt 1 | wt% | 0.20 | 0.20 | 0.20 | 0.20 | 0.2 |
| PTFE | wt% | 0.30 | 0.30 | 0.30 | 0.30 | 0.3 |
| Wax | wt% | | 1.00 | 1.00 | 1.00 | 1.00 |
| SUM | wt% | 100.00 | 100.00 | 100.00 | 100.00 | 100.00 |

| Properties | | | | | | |
|---|---|---|---|---|---|---|
| MFR @ 300°C/1.2kg | dg/min | too high | 4.8 | 4.0 | 5.0 | 24.5 |
| MV @ 300°C/1500s-1 | Pa.s | 57 | 371 | 342 | 334 | 137 |
| Vicat Temp | °C | 138.3 | 146.5 | 146.6 | 146.4 | 143.4 |
| Izod Notched | kJ/m² | 4 | 29 | 28 | 30 | 39 |
| UL @ 1.5 mm | - | V0 | V0 | V0 | V0 | NC |
| DC @ 6 GHz | - | 5.3 | 5.5 | 6.1 | 6.0 | 4.5 |
| DF @ 6 GHz | - | 0.006 | 0.007 | 0.007 | 0.008 | 0.008 |

Table 3 shows the results of using Aluminium doped Zink Oxide (AZO) according to the invention.

In CEx. 5 in which AZO is used without Wax, desirable dielectric properties and desirable flame retardancy were obtained. However, it can be understood that an excessive degradation of the resin has occurred. The MFR of the composition was too high to be measured. The degradation can also be confirmed from MV, Vicat temperature and Izod notched impact strength.

In contrast, in Ex. 1 in which AZO is used together with Wax, no excessive degradation of the resin has occurred. Also desirable dielectric properties and desirable flame retardancy were obtained.

This is striking in view of CEx. 6 in which ATO is used together with Wax, instead of AZO together with Wax as in Ex. 1. CEx. 6 shows that the excessive degradation of the resin caused by ATO was not prevented by Wax. Also a desirable flame retardancy was not obtained. It can thus be concluded that the specific LDS additive in combination with Wax results in the combination of desirable properties.

Ex. 2 and Ex. 3 also show the combination of desirable properties. It can be understood that a higher DC can be obtained by the use of a large amount of TiO2, but also that the DC is still high even without using a large amount of TiO2. The comparison between Ex 2 and Ex 3 shows that the type of the ceramic filler (TiO2 or BST) does not lead to a large difference.

**Table 4**

| **Sample** | | **Ex. 4** | **Ex. 5** | **Ex. 6** | **Ex. 7** |
|---|---|---|---|---|---|
| Component | Unit | wt% | wt% | wt% | wt% |
| PC (MFR=9.5) | wt% | 58.30 | 57.30 | 48.30 | 48.30 |
| AZO | wt% | 31.00 | 31.00 | 31.00 | 41.00 |
| TiO2 | wt% | 9.00 | 9.00 | 19.00 | 9.00 |
| Heat Stab | wt% | 0.05 | 0.05 | 0.05 | 0.05 |
| Mold Release | wt% | 0.15 | 0.15 | 0.15 | 0.15 |
| FR Salt 1 | wt% | 0.20 | 0.20 | 0.20 | 0.20 |
| PTFE | wt% | 0.30 | 0.30 | 0.30 | 0.30 |
| Wax | wt% | 1.00 | 2.00 | 1.00 | 1.00 |
| SUM | wt% | 100.00 | 100.00 | 100.00 | 100.00 |

| Properties | | | | | |
|---|---|---|---|---|---|
| MFR @ 300°C/1.2kg | dg/min | 7.0 | 6.8 | 3.9 | 9.3 |
| MV @ 300°C/1500s-1 | Pa.s | 346 | 238 | 339 | 318 |
| Vicat Temp | °C | 146.7 | 145.8 | 146.7 | 145.9 |
| Izod Notched | kJ/m² | 35 | 37 | 23 | 17 |
| UL @ 1.5 mm | - | V0 | V1 | V1 | V0 |
| DC @ 6 GHz | - | 5.5 | 5.7 | 6.8 | 6.8 |
| DF @ 6 GHz | - | 0.007 | 0.008 | 0.008 | 0.009 |

The comparison between Ex 4 and Ex 5 shows that a smaller amount of Wax is beneficial for the flame retardancy.

The comparison between Ex 4 and Ex 6 shows that a smaller amount of TiO2 is beneficial for the flame retardancy.

The comparison between Ex 4 and Ex 7 shows that a larger amount of PC with respect to AZO is beneficial for the impact strength.

The comparison between Ex 4 and Ex 6 shows that a larger amount of TiO2 is beneficial for DC.

The comparison between Ex 5 and Ex 7 shows that a larger amount of ATO is beneficial for DC.

**Table 5**

| **Sample** | | **Ex. 4** | **Ex. 8** | **Ex. 9** |
|---|---|---|---|---|
| Component | Unit | wt% | wt% | wt% |
| PC (MFR=9.5) | wt% | 58.30 | 54.30 | 54.30 |
| AZO | wt% | 31.00 | 31.00 | 31.00 |
| ATO | wt% | | 4.00 | |
| CuCr2O4 | wt% | | | 4.00 |
| TiO2 | wt% | 9.00 | 9.00 | 9.00 |
| Heat Stab | wt% | 0.05 | 0.05 | 0.05 |
| Mold Release | wt% | 0.15 | 0.15 | 0.15 |
| FR Salt 1 | wt% | 0.20 | 0.20 | 0.20 |
| PTFE | wt% | 0.30 | 0.30 | 0.30 |
| Wax | wt% | 1.00 | 1.00 | 1.00 |
| SUM | wt% | 100.00 | 100.00 | 100.00 |

| Properties | | | | |
|---|---|---|---|---|
| MFR @ 300°C/1.2kg | dg/min | 7.0 | 8.1 | 7.8 |
| MV @ 300°C/1500s-1 | Pa.s | 346 | 331 | 338 |
| Vicat Temp | °C | 146.7 | 146.2 | 146.1 |
| Izod Notched | kJ/m² | 35 | 30 | 29 |
| UL @ 1.5mm | - | V0 | V1 | V0 |
| DC @ 6 GHz | - | 5.5 | | 5.7 |
| DF @ 6 GHz | - | 0.007 | | 0.008 |

The comparison between Ex. 4 and Ex 8 shows that the addition of ATO lowers flame retardancy.

The comparison between Ex. 4 and Ex 9 shows that the addition of a small amount of CuCr2O4 does not substantially change the properties.

**Table 6**

| **Sample** | | **CEx. 7** | **CEx. 8** | **Ex. 10** | **Ex. 11** |
|---|---|---|---|---|---|
| Component | Unit | wt% | wt% | wt% | |
| PC (MFR=9.5) | wt% | 49.30 | 49.10 | 48.30 | 48.30 |
| CCTO | wt% | 20 | 20 | 20 | 20 |
| TiO2 | wt% | 15 | 15 | 15 | 15 |
| BST | wt% | 15 | 15 | 15 | 15 |
| Heat Stab | wt% | 0.05 | 0.05 | 0.05 | 0.05 |
| Mold Release | wt% | 0.15 | 0.15 | 0.15 | 0.15 |
| FR Salt 1 | wt% | 0.20 | 0.20 | 0.20 | |
| FR Salt 2 | | | | | 0.20 |
| PTFE | wt% | 0.30 | 0.30 | 0.30 | 0.30 |
| MZP | wt% | | 0.20 | | |
| Wax | wt% | | | 1.00 | 1.00 |
| SUM | wt% | 100.00 | 100.00 | 100.00 | |

| Properties | | | | | |
|---|---|---|---|---|---|
| MFR @ 300°C/1.2kg | dg/min | 28.7 | 14.7 | 8.2 | 6.2 |
| MV @ 300°C/1500s-1 | Pa.s | 158 | 235 | 249 | 258 |
| Vicat Temp | °C | 145.1 | 147.1 | 145.4 | 145.0 |
| Izod Notched | kJ/m² | 5 | 6 | 25 | 24 |
| UL @ 1.5 mm | - | V1 | V1 | V1 | V0 |
| DC @ 6 GHz | - | 5.8 | | 6 | |
| DF @ 6 GHz | - | 0.006 | | 0.007 | |

Table 6 shows the results of using calcium copper titanate (CCTO) according to the invention.

Similar to the experiments using AZO, CEx 7 which does not comprise the Wax shows a very high MFI and a very low Izod impact strength due to polymer degradation.

Ex 10 in which a small amount of Wax was added remarkably shows no degradation (low MFI/high MV, high impact strength) while showing an excellent flame retardancy. Further, a high DC was obtained by Ex 10.

Ex 11 in which a different type of flame retardant was used shows a combination of desirable properties. The flame retardancy was even better than in Ex 10.

CEx 8 shows that the addition of MZP has some influence in preventing polymer degradation, but its effect is very limited compared to the use of the Wax according to the present invention.

## Claims

1. A thermoplastic composition comprising:
a) 20 to 90 wt% of a thermoplastic resin,
b) a laser direct structuring additive,
c) optionally ceramic filler particles which do not have a laser direct structuring additive function and
d) 0.1 to 5.0 wt% of an acid-modified polymer,
wherein b) comprises
b1) a conductive metal oxide, wherein the conductive oxide has a resistivity of at most 5 x 10³ Ω·cm and contains at least a metal of Group n of the periodic table and a metal of Group n+1, wherein n is an integer of 3 to 13, and/or
b2) calcium copper titanate.

2. The composition according to claim 1, wherein a) is polycarbonate or a blend of polycarbonate and a rubber-like polymer, for example
- a blend of 45 to 75 wt% of polycarbonate, 5 to 40 wt% of ABS and 0 to 10 wt% of MBS wherein the amounts are with respect to the thermoplastic resin a) or
- a blend of 80 to 99 wt% of polycarbonate and 1 to 20 wt% of the graft copolymer comprising an elastomeric component containing Si, wherein the amounts are with respect to the thermoplastic resin a).

3. The composition according to any one of the preceding claims, wherein n is an integer of 10 to 13, preferably 12 or 13, more preferably 12, most preferably the metal of Group n is zinc and the metal of Group n+1 is aluminum.

4. The composition according to any one of the preceding claims, wherein b) comprises particles of b1) and/or particles of b2), preferably wherein the amount of the particles of b1), the amount of the particles of b2) or the total amount of the particles of b1) and the particles of b2) with respect to the amount of b) is 10 to 100 wt%, preferably at least 50 wt%, at least 60 wt%, at least 70 wt%, at least 80 wt%, at least 90 wt%, at least 95 wt%, at least 98 wt%, at least 99.0 wt%, at least 99.5 wt%, at least 99.9 wt% or 100 wt%.

5. The composition according to any one of the preceding claims, wherein the amount of b1), b2) or the total of b1) and b2) with respect to the total composition is 0.1 to 80 wt%, for example at least 31 wt%.

6. The composition according to any one of the preceding claims, wherein d) is an olefin polymer modified with a compound having a functional group, such as an unsaturated carboxylic acid compound.

7. The composition according to any one of the preceding claims, wherein a molded part of the composition has UL94 V2, V1 or V0 rating at a thickness of 1.5 mm (±10%), preferably wherein the composition comprises e) a flame retardant, wherein the amount of the flame retardant with respect to the total composition is 0.01 to 5.0 wt%.

8. The composition according to any one of the preceding claims, wherein the amount of c) with respect to the total composition is less than 10 wt%.

9. The composition according to any one of the preceding claims, wherein the composition has a dielectric constant measured at 1 GHz of at least 4.0, more preferably at least 4.2, more preferably at least 4.5, more preferably at least 4.7, more preferably at least 5.0, and/or wherein the composition has a tangent loss measured at 1 GHz of at most 0.014, more preferably at most 0.010, more preferably at most 0.007 and/or wherein the composition has a dielectric constant measured at 6 GHz of at least 4.2, preferably at least 4.5, more preferably at least 4.7, more preferably at least 5.0, and/or wherein the composition has a tangent loss measured at 6 GHz of at most 0.014, more preferably at most 0.010, more preferably at most 0.007 wherein the composition has a dielectric constant measured at 40 GHz of at least 3.5, preferably at least 4.0, more preferably at least 4.2, more preferably at least 4.5, more preferably at least 4.7, more preferably at least 5.0, and/or wherein the composition has a tangent loss measured at 40 GHz of at most 0.014, preferably at most 0.010, more preferably at most 0.007.

10. The composition according to any one of the preceding claims, wherein the total amount of b1) and b2) and c) with respect to the total composition is at least 35 wt%, preferably at least 40 wt%.

11. The composition according to any one of the preceding claims, wherein the composition comprises less than 2.5 wt% of a rubber-like polymer with respect to the total composition.

12. A molded part comprising the composition according to any one of claims 1-11.

13. A process for producing a circuit carrier, comprising providing the molded part according to claim 12; irradiating areas of said part on which conductive tracks are to be formed with laser radiation; and subsequently metalizing the irradiated areas.

14. The circuit carrier obtainable by the process according to claim 13.

15. An antenna comprising the circuit carrier according to claim 14.
